# EUROPEAN PATENT APPLICATION

(11) **EP 4 811 871 A1**
(43) Date of publication of application: **23.09.2026**
(21) Application number: 24891474.9
(22) Date of filing: 14.11.2024
(51) Int. Cl.: H04W 48/16, H04W 36/06, H04W 36/08, H04W 76/19

(54) **TERMINAL AND WIRELESS COMMUNICATION METHOD**

(30) Priority: 16.11.2023 JP 2023195140
(71) Applicant: NTT DOCOMO, INC., Tokyo 100-6150 (JP)
(72) Inventor: MIN Tianyang, Tokyo 100-6150 (JP)
(74) Representative: Hoffmann Eitle
(86) International application number: PCT/JP2024/040509
(87) International publication number: WO 2025/105438

(57) **Abstract**

A terminal includes a control unit that executes cell selection of a transition destination when mobility control by a lower layer fails, and a transmission unit that transmits a request for connection re-establishment when the selected cell is not a candidate cell according to the mobility control. The control unit executes the cell selection based on a priority according to cell transition between communication devices constituting a radio base station or cell transition within the communication device.

## Description

### TECHNICAL FIELD

The present disclosure relates to a terminal and a radio communication method supporting L1/L2 mobility (LTM).

### BACKGROUND ART

The 3rd Generation Partnership Project (3GPP: registered trademark) has specified the 5th generation mobile communication system (also referred to as 5G, New Radio (NR), or Next Generation (NG)), and is also proceeding with the specification of the next generation called Beyond 5G, 5G Evolution, or 6G.

For example, in 3GPP Release 18, extension of Layer 1/Layer 2 mobility (L1/L2 mobility) is discussed. L1/L2 mobility is also called Lower layer Triggered Mobility (LTM), and is a technology related to mobility of a terminal (User Equipment, UE) in Layer 1 or Layer 2, and includes transition (handover (HO)) of the UE to another cell or the like. HO by L1/L2 mobility is realized by a lower layer such as a Medium Access Control layer (MAC).

Further, regarding such LTM, a study is also proceeding on LTM fast failure recovery (which may be called LTM fast recovery), which is a mechanism in which, at the time of a failure of LTM, the UE executes cell selection, and when the selected cell is an LTM candidate cell, the UE applies the configuration of the candidate cell directly without transmitting an RRCReestablishmentRequest to a radio base station (gNB).

However, LTM fast failure recovery has a problem of reuse of a security key (key stream reuse) used for ensuring security (Non-Patent Literature 1).

### CITATION LIST

### NON-PATENT LITERATURE

Non-Patent Literature 1: "Keystream reuse issue caused by fast recovery after LTM cell switch", R2-2313310, 3GPP TSG-RAN WG2 Meeting #124, 3GPP, November 2023

### SUMMARY OF INVENTION

Further, in 3GPP Release-19, applying such LTM between Central Units (gNB-CUs) (inter-CU LTM) is also being studied. In the case of inter-CU LTM, since the security key always changes, the problem of key stream reuse as described above does not occur.

On the other hand, if inter-CU LTM is introduced, inter-CU LTM and LTM within a CU (intra-CU LTM) specified in 3GPP Release-18 may coexist. In this case, a specific LTM candidate cell may satisfy the relationships of both inter-CU LTM and intra-CU LTM.

Therefore, the following disclosure has been made in view of such a situation, and an object thereof is to provide a terminal and a radio communication method capable of executing an appropriate LTM operation even when inter-CU LTM and intra-CU LTM coexist.

One aspect of the present disclosure is a terminal including a control unit (control unit 240) that executes cell selection of a transition destination when mobility control by a lower layer fails, and a transmission unit (handover execution unit 230) that transmits a request for connection re-establishment when the selected cell is not a candidate cell according to the mobility control, wherein the control unit executes the cell selection based on a priority according to cell transition between communication devices constituting a radio base station or cell transition within the communication device.

### BRIEF DESCRIPTION OF DRAWINGS

[Fig. 1] Fig. 1 is an overall schematic configuration diagram of a radio communication system 10.
[Fig. 2] Fig. 2 is a diagram showing an example of control by L1/L2 mobility.
[Fig. 3] Fig. 3 is a functional block configuration diagram of a gNB 100.
[Fig. 4] Fig. 4 is a functional block configuration diagram of a UE 200.
[Fig. 5] Fig. 5 is an explanatory diagram of a problem in a case where inter-CU LTM and intra-CU LTM coexist.
[Fig. 6] Fig. 6 is a diagram showing an operation flow of the UE when an LTM failure occurs.
[Fig. 7] Fig. 7 is a diagram showing an example of a hardware configuration of the gNB 100 and the UE 200.
[Fig. 8] Fig. 8 is a diagram showing a configuration example of a vehicle 2001.

### DESCRIPTION OF EMBODIMENTS

Hereinafter, embodiments will be described with reference to the drawings. Note that the same functions and configurations are denoted by the same or similar symbols, and descriptions thereof will be omitted as appropriate.

### (1) Overall Schematic Configuration of Radio Communication System

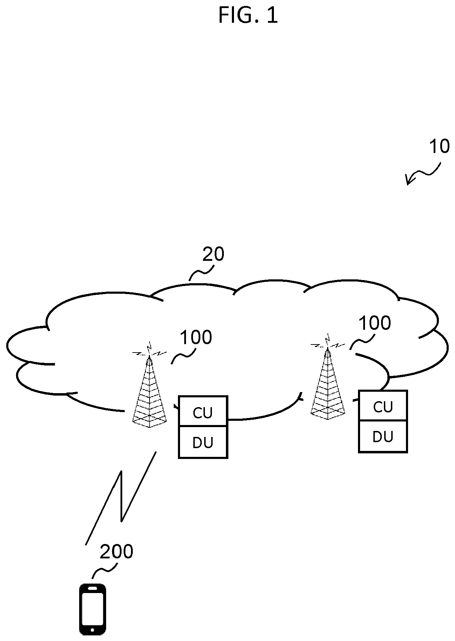

Fig. 1 is an overall schematic configuration diagram of a radio communication system 10 according to the present embodiment. The radio communication system 10 is a radio communication system according to 5G New Radio (NR), and includes a Next Generation-Radio Access Network 20 (hereinafter, NG-RAN 20) and a terminal 200 (User Equipment 200, hereinafter, UE 200).

Note that the radio communication system 10 may be a radio communication system according to a scheme called Beyond 5G, 5G Evolution, or 6G, or may include a radio communication system according to a scheme called Long Term Evolution (LTE) or 4G. The radio communication system 10 may support functions related to Industrial Internet of Things (IIoT) and URLLC (Ultra-Reliable and Low Latency Communications).

The NG-RAN 20 includes a radio base station 100 (hereinafter, gNB 100). Note that the specific configuration of the radio communication system 10 including the numbers of gNBs (which may be eNBs or the like) and UEs is not limited to the example shown in Fig. 1.

Further, the gNB 100 may adopt a fronthaul (FH) interface specified by O-RAN (Open Radio Access Network Alliance). The gNB 100 may include an O-DU (O-RAN Distributed Unit) and an O-RU (O-RAN Radio Unit). The gNB 100 can function as a type of NG-RAN node.

The NG-RAN 20 actually includes a plurality of NG-RAN Nodes, specifically, gNBs (or ng-eNBs), and is connected to a core network (5GC, not shown) according to 5G. The NG-RAN 20 and the 5GC may be simply expressed as a "network". In the 5GC, a concept of CUPS (Control and User Plane Separation) in which functions of a user plane and a control plane are clearly separated may be introduced.

The gNB 100 is a radio base station according to NR, and executes radio communication according to NR with the UE 200. Note that the gNB 100 may be configured to include a CU (Central Unit) and a DU (Distributed Unit), and the DU may be separated from the CU and installed in a geographically different location. One or a plurality of DUs may be connected to the CU. Further, gNBs 100 (gNB-CUs) may be connected by an Xn interface, and the CU and the DU may be connected by an F1 interface (F1-AP or the like). In the present embodiment, the CU may be called a communication device, a central unit, or the like. Further, the DU may be called a distributed unit or the like.

The gNB 100 and the UE 200 can support Massive MIMO that generates a beam with higher directivity by controlling radio signals transmitted from a plurality of antenna elements, Carrier Aggregation (CA) that bundles and uses a plurality of Component Carriers (CCs), Dual Connectivity (DC) that performs communication simultaneously between the UE and each of a plurality of NG-RAN Nodes, and the like.

The type of DC may be Multi-RAT Dual Connectivity (MR-DC) using a plurality of radio access technologies, or NR-NR Dual Connectivity (NR-DC) using only NR. For example, any gNB may constitute a Master Node (MN), and one or a plurality of other gNBs may constitute a Secondary Node (SN).

In the radio communication system 10, not only mobility control of the UE 200 in Layer 3 (which may be called L3 Mobility) but also mobility control in Layer 1 and/or Layer 2 (which may be called L1/L2 Mobility or LTM) may be applied. L3 Mobility may be interpreted as mobility control in a Radio Resource Control layer (RRC). On the other hand, L1/L2 Mobility may be interpreted as mobility control (mobility control by a lower layer) in a Physical layer (PHY), a Medium Access Control layer (MAC), a Radio Link Control layer (RLC), and a Packet Data Convergence Protocol layer (PDCP).

Further, in UE-initiated LTM (UE based LTM), similarly to Conditional Handover (CHO), the UE may monitor a state according to a specific execution condition after receiving the execution condition from the radio base station (gNB), and may execute LTM when the execution condition is satisfied.

Note that LTM may include LTM fast failure recovery. LTM fast failure recovery is a mechanism in which, at the time of a failure of LTM, the UE 200 executes cell selection, and when the selected cell is an LTM candidate cell, the UE 200 applies the configuration of the candidate cell directly without transmitting an RRCReestablishmentRequest to the gNB 100.

Although the mobility of the UE 200 may mean ease of movement and mobility of the UE 200 in a broad sense, in the present embodiment, it may mean minimization of call drop, radio link (including beam) failure, unnecessary handover, ping-pong state, and the like.

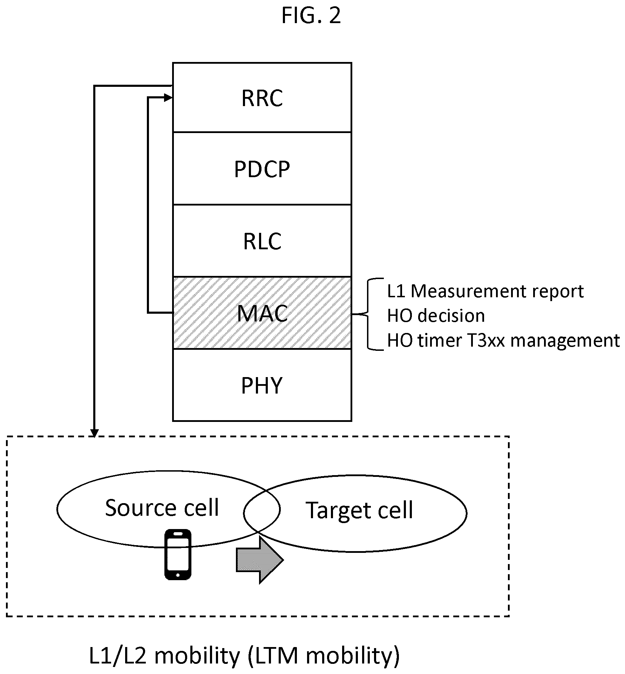

Fig. 2 shows an example of control by L1/L2 mobility. As shown in Fig. 2, not the RRC included in Layer 3 but the MAC included in a lower layer (Layer 1/Layer 2) can execute measurement reporting, determination of handover (HO) from a source cell to a target cell (which may include a candidate), management of a timer (here, denoted as T3xx for convenience) for determining success or failure of HO, and the like. T3xx may be interpreted as a timer set for the same purpose as the timer T304 in L3, that is, a timer used for determining success or failure of HO (cell transition).

The MAC may report information on the measurement reporting, the HO determination, and T3xx to an upper layer (RRC). The RRC may manage a state of radio resources associated with the cell transition of the UE 200 based on the report.

Further, in the present embodiment, the channel includes a control channel and a data channel. The control channel includes a PDCCH (Physical Downlink Control Channel), a PUCCH (Physical Uplink Control Channel), a PRACH (Physical Random Access Channel), a PBCH (Physical Broadcast Channel), and the like.

Further, the data channel includes a PDSCH (Physical Downlink Shared Channel), a PUSCH (Physical Uplink Shared Channel), and the like.

Note that the reference signal includes a Demodulation Reference Signal (DMRS), a Sounding Reference Signal (SRS), a Phase Tracking Reference Signal (PTRS), a Channel State Information-Reference Signal (CSI-RS), and the like, and the signal includes a channel and a reference signal. Further, data may mean data transmitted via the data channel.

### (2) Functional Block Configuration of Radio Communication System

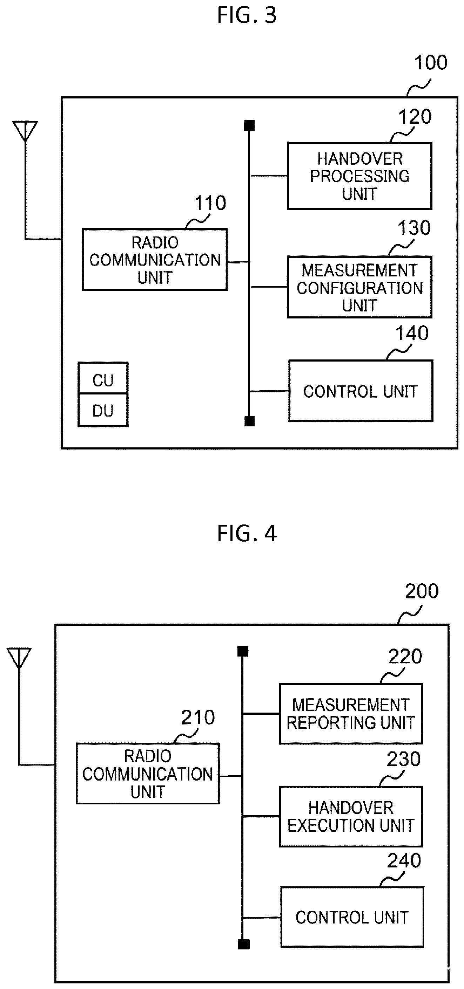

Next, a functional block configuration of the radio communication system 10 will be described. Specifically, functional block configurations of the gNB 100 and the UE 200 will be described. Fig. 3 is a functional block configuration diagram of the gNB 100. Fig. 4 is a functional block configuration diagram of the UE 200.

### (2.1) gNB 100

As shown in Fig. 3, the gNB 100 includes a radio communication unit 110, a handover processing unit 120, a measurement configuration unit 130, and a control unit 140.

The radio communication unit 110 transmits a downlink signal (DL signal) according to NR. Further, the radio communication unit 110 receives an uplink signal (UL signal) according to NR.

A TCI state can provide information on antenna ports that are quasi-collocated (QCL) with an antenna port of the PDCCH. When the UE 200 has a specific control resource set (CORESET) spatially quasi-collocated with a specific CSI-RS, the UE 200 can judge which beam is appropriate when attempting to receive the PDCCH by the CORESET. Note that QCL/TCI state/beam may be read interchangeably.

The handover processing unit 120 executes handover of the UE 200. Specifically, the handover processing unit 120 executes handover of the UE 200 from a serving cell to another neighboring cell.

Note that the serving cell may be simply interpreted as a cell to which the UE 200 is connected; however, more strictly, in the case of a UE in RRC_CONNECTED for which Carrier Aggregation (CA) is not configured, there is only one serving cell constituting a Primary Cell. In the case of a UE in RRC_CONNECTED configured using CA, the serving cell may be interpreted as indicating a set of one or a plurality of cells including a Primary Cell and all Secondary Cells.

Further, the handover may include Conditional Handover (CHO) and/or DAPS (Dual Active Protocol Stack) handover. In CHO, when a specific execution condition is satisfied, handover initiated by the UE 200 can be executed. When CHO is not applicable, normal handover may be executed (which may be called CHO recovery). In CHO recovery, the UE 200 executes cell selection after CHO failure, but when a CHO candidate cell is selected, the UE 200 can apply conditional RRCReconfiguration of the cell directly and reconnect without transmitting an RRCReestablishmentRequest to the candidate target cell.

The execution condition may be constituted by one or two trigger conditions (CHO events A3/A5 specified in 3GPP TS 38.331). A single Reference Signal (RS) type may be triggered, and up to two different trigger quantities (e.g., Reference Signal Received Power (RSRP) and Reference Signal Received Quality (RSRQ), RSRP and Signal-to-Interference plus Noise power Ratio (SINR), etc.) may be configured simultaneously for evaluation of the CHO execution condition of a single candidate cell.

Note that transition (handover) between candidate Secondary Nodes (which may be read as target Secondary Nodes, target cells, candidate cells, or the like) of the UE according to LTM may be called Inter-SN LTM.

Connection information required for connection with a candidate Secondary Node may be interpreted as information used for the UE 200 to connect to the candidate Secondary Node. For example, the connection information may include at least any of an uplink (UL) Timing Advance (TA), a TCI state, and an Active Bandwidth Part (Active BWP) in the candidate Secondary Node.

Further, the handover processing unit 120 may transmit, to the UE 200, a start instruction that explicitly or implicitly instructs start of monitoring of a specific execution condition used for L1/L2 Mobility (LTM).

The measurement configuration unit 130 executes configuration of quality measurement (measurement configuration) of the serving cell and a neighboring cell by the UE 200. Specifically, the measurement configuration unit 130 may execute measurement configuration in Layer 3, or may execute measurement configuration in Layer 1 and/or Layer 2.

The measurement configuration unit 130 can notify the UE 200 of the content of the measurement configuration. The UE 200 may measure the quality of the serving cell and/or the neighboring cell based on the notified measurement configuration. The measurement configuration unit 130 can receive a measurement report indicating a measurement result of the cell quality from the UE 200.

The control unit 140 controls each functional block constituting the gNB 100. Particularly, in the present embodiment, the control unit 140 can execute mobility control with the terminal. Specifically, the control unit 140 can execute not only mobility control according to L3 Mobility but also mobility control according to L1/L2 Mobility (LTM).

Further, in the gNB 100 having a CU-DU configuration, the control unit 140 can execute control as a CU (source side or target side) or a DU (source side or target side).

### (2.2) UE 200

As shown in Fig. 4, the UE 200 includes a radio communication unit 210, a measurement reporting unit 220, a handover execution unit 230, and a control unit 240.

The radio communication unit 210 transmits an uplink signal (UL signal) according to NR. Further, the radio communication unit 210 receives a downlink signal (DL signal) according to NR.

The measurement reporting unit 220 can measure the quality of the serving cell of the UE 200 and a neighboring cell of the serving cell, and report a measurement result (Measurement Report) to the network. The measurement reporting unit 220 may execute measurement reporting of a source cell and a target cell at the time of handover.

The quality to be measured may be, for example, quality included in the Measurement Report specified in 3GPP TS 38.331 (e.g., Reference Signal Received Power (RSRP), Reference Signal Received Quality (RSRQ)).

The handover execution unit 230 executes handover of the UE 200. Specifically, the handover execution unit 230 may execute handover to a transition destination cell (NG-RAN Node) based on control by the gNB 100.

Further, the handover execution unit 230 can execute processing related to normal handover (legacy handover), Conditional Handover (CHO), and DAPS handover.

In the case of CHO, the handover execution unit 230 may transition to a candidate cell when an execution condition is satisfied. As described above, the execution condition may be determined based on the quality of a reference signal (RS), specifically, a value of RSRP, RSRQ, or SINR.

Further, in CHO, the transition destination may not involve an SCG, or may involve an SCG. In other words, the transition destination cell by CHO may be a single cell, or may be constituted by a plurality of cells (which may be read as a cell group) according to DC.

Further, the handover execution unit 230 may execute handover based on not only L3 Mobility but also L1/L2 Mobility. Handover may be read as transition, cell transition, cell selection, or the like. Specifically, the handover execution unit 230 may execute handover based on L1/L2 Mobility based on a command of at least either Layer 1 or Layer 2.

Although the type of the command is not particularly limited, it may be, for example, an L1/L2 Mobility command. The L1/L2 Mobility command may be read as another command of an RRC layer.

The handover execution unit 230 may receive configuration information related to L1/L2 Mobility (LTM). The configuration information may mean a configuration related to LTM (LTM config). However, it is not necessarily limited to LTM config as long as it is content indicating a configuration related to LTM (which may include an execution condition, etc.).

Further, when a cell selected by the control unit 240 (which may be interpreted as a transition destination cell or a handover destination cell) is not a candidate cell according to L1/L2 Mobility (LTM) (LTM candidate cell), the handover execution unit 230 may transmit a request for re-establishment (request for connection re-establishment). In the present embodiment, the handover execution unit 230 may constitute a transmission unit that transmits a request for connection re-establishment.

Specifically, the handover execution unit 230 may transmit an RRC Reestablishment Request to the network (gNB 100). Here, a destination of the RRC Reestablishment Request may be addressed to the CU or may be addressed to the DU. Note that as long as it is a message requesting reconnection in the RRC layer, it is not necessarily limited to the RRC Reestablishment Request, and may be another message (e.g., RRC Resume Request).

When the cell selected by the control unit 240 is an LTM candidate cell and the transition is cell transition within a CU (communication device) (intra-CU LTM), the handover execution unit 230 may transmit the request for re-establishment (RRC Reestablishment Request) without executing a recovery procedure according to L1/L2 Mobility (LTM) (LTM fast recovery).

The control unit 240 controls each functional block constituting the UE 200. Specifically, the control unit 240 can execute control regarding registration of the UE 200 to the network (camping on a specific cell), measurement reporting, and handover of the UE 200.

Further, the control unit 240 can execute L1/L2 Mobility, that is, mobility control of at least either Layer 1 or Layer 2. Mobility control by L1/L2 Mobility may include quality measurement of a service area and a neighboring cell in Layer 1 or Layer 2, configuration of a transition destination candidate cell, cell reselection (transition), handover, and the like.

When executing a random access procedure (RA procedure), the control unit 240 may start monitoring of an execution condition. Conversely, when not executing the RA procedure, the control unit 240 may wait for notification of a TA value in a candidate Secondary Node from the gNB 100 without starting monitoring of the execution condition.

Further, when L1/L2 Mobility (LTM) fails (LTM failure), the control unit 240 can execute cell selection of a transition destination. Note that LTM failure may include failure in measurement or transition (handover) procedure associated with cell transition by LTM.

When executing cell selection of a transition destination in association with LTM failure, the control unit 240 may execute the cell selection based on a priority according to cell transition between communication devices (CUs) constituting the gNB 100 (inter-CU LTM) or cell transition within the communication device (intra-CU LTM).

Specifically, the control unit 240 may prioritize the cell transition between the communication devices (inter-CU LTM) over the cell transition within the communication device (intra-CU LTM). Alternatively, the control unit 240 may prioritize the cell transition within the communication device (intra-CU LTM) over the cell transition between the communication devices (inter-CU LTM).

Further, when the cell selected in association with LTM failure is a candidate cell according to L1/L2 Mobility (LTM) (LTM candidate cell) and the transition is cell transition between the communication devices (inter-CU LTM), the control unit 240 may execute a recovery procedure according to L1/L2 Mobility (LTM) (LTM fast recovery).

### (3) Operation of Radio Communication System

Next, the operation of the radio communication system 10 will be described. Specifically, an operation example of the UE 200 in a case where inter-CU LTM and intra-CU LTM coexist will be described.

### (3.1) Premise and Problem

3GPP has pointed out that LTM fast recovery has a problem of reuse of a security key (key stream reuse) used for ensuring security. Specifically, in cell transition within the same gNB (CU) (intra-CU LTM), since the same security key is used before and after the cell transition, there is a concern about vulnerability in security.

As described above, since LTM fast recovery in intra-CU LTM has the problem of key stream reuse, for example, in 3GPP Release-19, the following solutions can be considered.

- (Option 1): Do not support LTM fast recovery
- (Option 2): Support LTM fast recovery while avoiding key stream reuse

For example, after LTM failure, TX_NEXT, which is a PDCP state variable, does not return (does not revert) to the COUNT value used in the source cell of the transition source. In fast recovery of CHO, TX_NEXT of the PDCP state variable reverts to the COUNT value used in the source cell. Therefore, as a result, the same security key is reused.

On the other hand, in the case of inter-CU LTM, since the security key always changes, the problem of key stream reuse does not occur.

However, when inter-CU LTM is introduced, a scenario in which inter-CU LTM and intra-CU LTM coexist may occur.

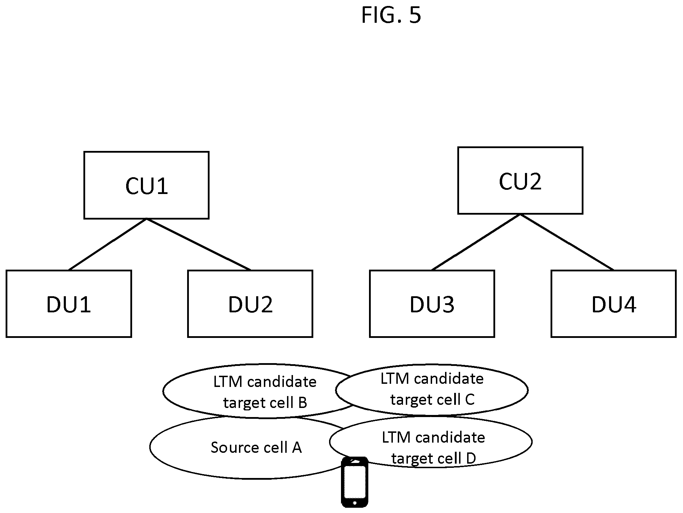

Fig. 5 is an explanatory diagram of a problem in a case where inter-CU LTM and intra-CU LTM coexist. When inter-CU LTM is introduced (assuming 3GPP Release-19), intra-CU LTM specified in 3GPP Release-18 and newly introduced inter-CU LTM coexist.

That is, when the UE configures a plurality of candidate target cells (LTM candidate cells), some candidate cells may have an inter-CU relationship with the source cell, and some other cells may have an intra-CU relationship with the source cell.

For example, as shown in Fig. 5, when source cell: cell A, LTM candidate target cell: cell B, cell C, cell D are formed, since cell A and cell B are under the control of the same CU1, they have an intra-CU relationship. On the other hand, since cell C and cell D are under the control of CU2, they have an inter-CU relationship with cell A.

In this case, there arises a problem that the UE cannot determine a method of LTM fast recovery (inter-CU LTM or intra-CU LTM) between the cells. Hereinafter, an operation example capable of solving such a problem will be described.

### (3.2) Operation Example

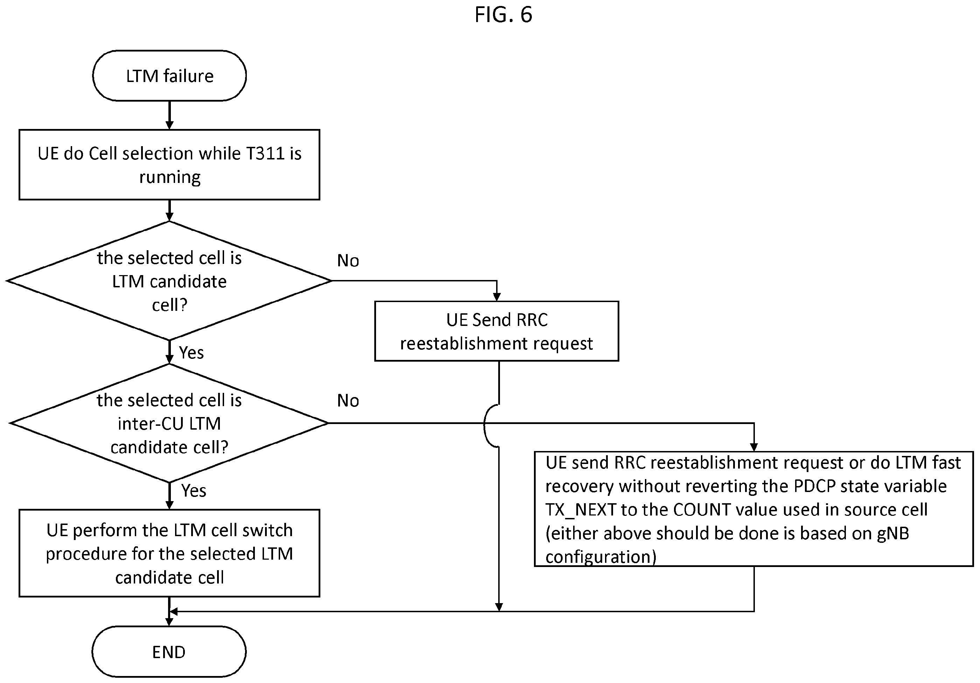

The procedure of LTM fast recovery is constituted by the following steps. Fig. 6 shows an operation flow of the UE when an LTM failure occurs.

- Step A: After LTM failure, the UE executes cell selection.
- Step B: When the selected cell is an LTM candidate cell, the UE executes an LTM cell switch procedure targeting the selected cell.
- Step C: When the selected cell is not an LTM candidate cell, the UE transmits an RRC Reestablishment Request.

When the UE executes cell selection in Step A, if a plurality of candidate cells exist, a priority for selecting an intra-CU candidate cell or an inter-CU candidate cell may be added as a new condition in addition to the condition of cell quality.

In the case of an inter-CU candidate cell, as described above, since the problem of key stream reuse does not occur, the UE may preferentially select inter-CU LTM (inter-CU candidate cell) and execute LTM fast recovery. Alternatively, the UE may preferentially select intra-CU LTM (intra-CU candidate cell) and execute LTM fast recovery.

Further, the priority may be configured by RRC from the gNB in advance, or may be included in an LTM cell switch command (MAC CE). The configuration content of the priority may be taken over by a target gNB by transmitting it from a source gNB to the target gNB using a handover preparation message or a handover request message at the time of transition (handover).

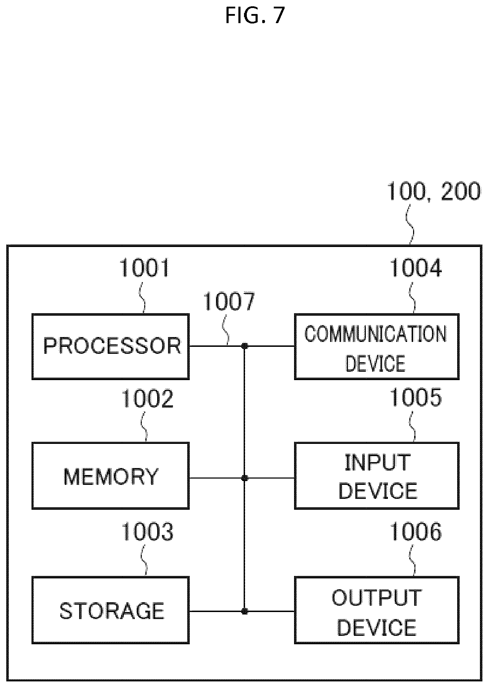

Alternatively, the UE executes cell selection in Step A, and when the selected cell is an LTM candidate cell, the UE may execute different operations as follows depending on the type of the cell (intra-CU candidate cell or inter-CU candidate cell) (see the flow in Fig. 7).

Specifically, in the case of an intra-CU candidate cell, the UE may transmit an RRC Reestablishment Request without executing LTM fast recovery, or may execute LTM fast recovery without reverting the PDCP state variable TX_NEXT to the COUNT value used in the source cell. In this case, an instruction as to whether to transmit the RRC Reestablishment Request without executing LTM fast recovery or to execute LTM fast recovery without reverting the PDCP state variable TX_NEXT to the COUNT value used in the source cell may be configured by RRC from the gNB in advance, or may be included in an LTM cell switch command (MAC CE).

The configuration content may be taken over by a target gNB by transmitting it from a source gNB to the target gNB using a handover preparation message or a handover request message at the time of transition (handover).

In the case of an inter-CU candidate cell, the UE may directly execute LTM fast recovery. That is, the UE may execute the LTM cell switch procedure targeting the selected cell.

Further, when the UE executes cell selection after LTM failure, the determination as to whether the cell is an intra-CU candidate cell or an inter-CU candidate cell may be executed, for example, as follows. Specifically, in RRC, an ID of a serving cell (e.g., securityCellSetId) may be assigned in advance, and the ID may also be assigned to each candidate cell. It may be determined that a candidate cell to which the same ID as that of the serving cell is assigned is an intra-CU candidate cell, and a cell to which a different ID is assigned is an inter-CU candidate cell.

According to this operation example, when the UE executes cell selection after LTM failure, even if an intra-CU candidate cell and an inter-CU candidate cell coexist, the operation to be taken by the UE according to the type of the LTM candidate cell can be clarified.

Specifically, the UE can execute selection of an LTM candidate cell based on a priority according to inter-CU LTM or intra-CU LTM. Therefore, the UE can execute an appropriate LTM operation even when inter-CU LTM and intra-CU LTM coexist.

### (4) Other Embodiments

Although the embodiment has been described above, it is obvious to those skilled in the art that the present disclosure is not limited to the description of the embodiment, and various modifications and improvements are possible.

For example, in the above description, configure, activate, update, indicate, enable, specify, and select may be interchangeably interpreted. Similarly, link, associate, correspond, and map may be interchangeably interpreted, and allocate, assign, monitor, and map may also be interchangeably interpreted.

In addition, specific, dedicated, UE-specific, and UE-dedicated may be interchangeably interpreted. Similarly, common, shared, group-common, UE-common, and UE-shared may be interchangeably interpreted.

The block configuration diagrams (Figs. 3 and 4) used in the description of the above-described embodiment show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that makes a transmitting function work may be called a transmitting unit or a transmitter. For any of the above, as described above, the realization method is not particularly limited.

Further, the above-described gNB 100 and UE 200 (the apparatuses) may function as a computer that performs processing of a radio communication method of the present disclosure. Fig. 7 is a diagram illustrating an example of a hardware configuration of the apparatus. As shown in Fig. 7, the apparatus may be configured as a computer apparatus including a processor 1001, a memory 1002, a storage 1003, a communication device 1004, an input device 1005, an output device 1006, a bus 1007, and the like.

Note that in the following description, the word "apparatus" can be read as a circuit, a device, a unit, or the like. The hardware configuration of the apparatus may be configured to include one or a plurality of the apparatuses shown in the figure, or may be configured not to include some of the apparatuses.

Each of the functional blocks of the apparatus (see Figs. 3 and 4) is implemented by means of any of hardware elements of the computer apparatus or a combination of the hardware elements.

Each function in the apparatus is realized by loading predetermined software (programs) on hardware such as the processor 1001 and the memory 1002 so that the processor 1001 performs arithmetic operations to control communication via the communication device 1004 and to control at least one of reading and writing of data on the memory 1002 and the storage 1003.

The processor 1001 operates, for example, an operating system to control the entire computer. The processor 1001 may be configured with a central processing unit (CPU) including interfaces with peripheral devices, control devices, arithmetic devices, registers, and the like.

Moreover, the processor 1001 reads a program (program code), a software module, data, and the like from at least one of the storage 1003 and the communication device 1004 into the memory 1002, and performs various processes according to these. As the program, a program causing the computer to perform at least part of the operation described in the above embodiment is used. Alternatively, various processes described above may be performed by one processor 1001 or may be performed simultaneously or sequentially by two or more processors 1001. The processor 1001 may be implemented by using one or more chips. Alternatively, the program may be transmitted from a network via a telecommunication line.

The memory 1002 is a computer readable recording medium and may be configured, for example, with at least one of a Read Only Memory (ROM), Erasable Programmable ROM (EPROM), Electrically Erasable Programmable ROM (EEPROM), Random Access Memory (RAM), and the like. The memory 1002 may be referred to as a register, cache, main memory (main storage device), and the like. The memory 1002 may store therein programs (program codes), software modules, and the like that can perform the method according to one embodiment of the present disclosure.

The storage 1003 is a computer readable recording medium. Examples of the storage 1003 include at least one of an optical disk such as Compact Disc ROM (CD-ROM), a hard disk drive, a flexible disk, a magneto-optical disk (for example, a compact disk, a digital versatile disk, Blu-ray (registered trademark) disk), a smart card, a flash memory (for example, a card, a stick, a key drive), a floppy (registered trademark) disk, a magnetic strip, and the like. The storage 1003 may be referred to as an auxiliary storage device. The recording medium may be, for example, a database including at least one of the memory 1002 and the storage 1003, a server, or other appropriate medium.

The communication device 1004 is hardware (transmission/reception device) capable of performing communication between computers via at least one of a wired network and a wireless network. The communication device 1004 is also referred to as, for example, a network device, a network controller, a network card, a communication module, and the like.

The communication device 1004 may include a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may have an integrated configuration (for example, a touch screen).

Also, the respective devices such as the processor 1001 and the memory 1002 are connected to each other with the bus 1007 for communicating information. The bus 1007 may be constituted by a single bus or may be constituted by different buses for each device-to-device.

Further, the apparatus may be configured to include hardware such as a microprocessor, a Digital Signal Processor (DSP), an Application Specific Integrated Circuit (ASIC), a Programmable Logic Device (PLD), and a Field Programmable Gate Array (FPGA). Some or all of these functional blocks may be realized by means of this hardware. For example, the processor 1001 may be implemented by using at least one of the above-described items of hardware.

Further, notification of information is not limited to that in the aspect/embodiment described in the present disclosure, and may be performed by using other methods. For example, notification of information may be performed by physical layer signaling (for example, Downlink Control Information (DCI), Uplink Control Information (UCI), higher layer signaling (for example, RRC signaling, Medium Access Control (MAC) signaling, broadcast information (Master Information Block (MIB), System Information Block (SIB)), other signals, or a combination thereof. The RRC signaling may also be referred to as an RRC message, for example, or may be an RRC Connection Setup message, an RRC Connection Reconfiguration message, or the like.

Each aspect/embodiment described in the present disclosure may be applied to at least one of Long Term Evolution (LTE), LTE-Advanced (LTE-A), SUPER 3G, IMT-Advanced, the 4th generation mobile communication system (4G), the 5th generation mobile communication system (5G), 6th generation mobile communication system (6G), xth generation mobile communication system (xG) (x is, for example, an integer or a decimal), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), a system using any other appropriate system, and a next-generation system that is expanded based on these. Further, a plurality of systems may be combined (for example, a combination of at least one of LTE and LTE-A with 5G) and applied.

The order of the processing procedures, sequences, flowcharts, and the like of each aspect/embodiment described in the present disclosure may be exchanged as long as there is no contradiction. For example, the methods described in the present disclosure present the elements of the various steps by using an exemplary order and are not limited to the presented specific order.

The specific operation that is performed by a base station in the present disclosure may be performed by its upper node in some cases. In a network constituted by one or more network nodes having a base station, it is obvious that the various operations performed for communication with the terminal may be performed by at least one of the base station and other network nodes other than the base station (for example, an MME, an S-GW, and the like may be considered, but there is not limited thereto). In the above, an example in which there is one network node other than the base station is explained; however, a combination of a plurality of other network nodes (for example, an MME and an S-GW) may be used.

Information and signals (information and the like) can be output from a higher layer (or lower layer) to a lower layer (or higher layer). These may be input and output via a plurality of network nodes.

The input/output information may be stored in a specific location (for example, a memory) or may be managed in a management table. The information to be input/output can be overwritten, updated, or added. The information may be deleted after outputting. The inputted information may be transmitted to another apparatus.

The determination may be made by using a value (0 or 1) represented by one bit, by truth-value (Boolean: true or false), or by comparison of numerical values (for example, comparison with a predetermined value).

Each of the aspects/embodiment described in the present disclosure may be used separately or in combination, or may be switched in accordance with the execution. In addition, notification of predetermined information (for example, notification of "is X") is not limited to being performed explicitly, and it may be performed implicitly (for example, without notifying the predetermined information).

Software should be interpreted broadly to mean instructions, an instruction set, code, a code segment, program code, a program, a subprogram, a software module, an application, a software application, a software package, a routine, a subroutine, an object, an executable file, an execution thread, a procedure, a function, and the like, regardless of being referred to as software, firmware, middleware, microcode, hardware description language, or some other name.

Further, software, instruction, information, and the like may be transmitted and received via a transmission medium. For example, when software is transmitted from a website, a server, or another remote source by using at least one of a wired technology (a coaxial cable, an optical fiber cable, a twisted pair cable, a Digital Subscriber Line (DSL), or the like) and a wireless technology (infrared light, microwave, or the like), then at least one of these wired and wireless technologies is included within the definition of the transmission medium.

Information, signals, or the like described in the present disclosure may be represented by using any of a variety of different technologies. For example, data, an instruction, a command, information, a signal, a bit, a symbol, a chip, or the like that may be mentioned throughout the above description may be represented by a voltage, a current, an electromagnetic wave, a magnetic field or magnetic particles, an optical field or photons, or any combination thereof.

It should be noted that the terms described in the present disclosure and terms necessary for understanding the present disclosure may be replaced with terms having the same or similar meanings. For example, at least one of a channel and a symbol may be a signal (signaling). A signal may also be a message. Further, a Component Carrier (CC) may be referred to as a carrier frequency, a cell, a frequency carrier, or the like.

The terms "system" and "network" used in the present disclosure can be used interchangeably.

Furthermore, information, parameters, and the like described in the present disclosure may be represented by an absolute value, may be represented by a relative value from a predetermined value, or may be represented by corresponding other information. For example, a radio resource may be indicated using an index.

Names used for the above parameters are not restrictive names in any respect. In addition, formulas and the like using these parameters may be different from those explicitly disclosed in the present disclosure. Since the various channels (for example, a PUCCH, a PDCCH, or the like) and information elements can be identified by any suitable names, the various names allocated to these various channels and information elements shall not be restricted in any way.

In the present disclosure, the terms such as "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. A base station may also be referred to with a term such as a macro cell, a small cell, a femtocell, or a pico cell.

A base station can accommodate one or more (for example, three) cells (also referred to as sectors). In a configuration in which a base station accommodates a plurality of cells, the entire coverage area of the base station can be divided into a plurality of smaller areas. In each of the smaller areas, a communication service can be provided by a base station subsystem (for example, a small base station for indoor use (Remote Radio Head: RRH)).

The term "cell" or "sector" refers to a part or all of the coverage area of at least one of a base station and a base station subsystem that performs a communication service in this coverage.

In the present disclosure, that a base station transmits information to a terminal may be replaced with that a base station instructs a terminal to perform control or operation based on the information.

In the present disclosure, the terms such as "mobile station (Mobile Station: MS)", "user terminal", "user equipment (User Equipment: UE)", and "terminal" can be used interchangeably.

A mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms by those skilled in the art.

At least one of a base station and a mobile station may be called a transmitting device, a receiving device, a communication device, or the like. Note that at least one of a base station and a mobile station may be a device mounted on a moving body, a moving body itself, or the like. The moving body may be a vehicle (for example, a car, an airplane, or the like), an unmanned moving body (a drone, a self-driving car, or the like), or a robot (manned type or unmanned type). At least one of a base station and a mobile station also includes a device that does not necessarily move during the communication operation. For example, at least one of a base station and a mobile station may be an Internet of Things (IoT) device such as a sensor.

Also, a base station in the present disclosure may be read as meaning a mobile station (user terminal, hereinafter, the same). For example, each aspect/embodiment of the present disclosure may be applied to a configuration in which communication between a base station and a mobile station is replaced with communication between a plurality of mobile stations (which may be called Device-to-Device (D2D), Vehicle-to-Everything (V2X), or the like). In this case, the mobile station may have the function of a base station. In addition, words such as "uplink" and "downlink" may also be read as meaning words corresponding to inter-terminal communication (for example, "side"). For example, an uplink channel, a downlink channel, or the like may be read as meaning a side channel (or side link).

Similarly, the mobile station in the present disclosure may be read as meaning a base station. In this case, the base station may have the function of the mobile station.

A radio frame may be composed of one or more frames in the time domain. Each of the one or more frames in the time domain may be referred to as a subframe. A subframe may be further composed of one or more slots in the time domain. The subframe may be a fixed time length (for example, 1 ms) independent of the numerology.

The numerology may be a communication parameter applied to at least one of transmission and reception of a certain signal or channel. The numerology may indicate at least one of, for example, subcarrier spacing (SCS), bandwidth, symbol length, cyclic prefix length, transmission time interval (TTI), the number of symbols per TTI, radio frame configuration, a specific filtering process performed by a transceiver in the frequency domain, a specific windowing process performed by a transceiver in the time domain, and the like.

A slot may be composed of one or more symbols (Orthogonal Frequency Division Multiplexing (OFDM)) symbols, Single Carrier Frequency Division Multiple Access (SC-FDMA) symbols, and the like) in the time domain. A slot may be a unit of time based on the numerology.

A slot may include a plurality of minislots. Each minislot may be composed of one or more symbols in the time domain. A minislot may be called a subslot. A minislot may be composed of fewer symbols than slots. A PDSCH (or PUSCH) transmitted in time units greater than the minislot may be referred to as a PDSCH (or PUSCH) mapping type A. A PDSCH (or PUSCH) transmitted using a minislot may be referred to as a PDSCH (or PUSCH) mapping type B.

Each of a radio frame, subframe, slot, minislot, and symbol represents a time unit for transmitting a signal. A radio frame, subframe, slot, minislot, and symbol may have respectively different names corresponding to them.

For example, one subframe may be called a transmission time interval (TTI), a plurality of consecutive subframes may be called a TTI, and one slot or one minislot may be called a TTI. That is, at least one of the subframe and TTI may be a subframe (1 ms) in the existing LTE, a period shorter than 1 ms (for example, 1 to 13 symbols), or a period longer than 1 ms. Note that, a unit representing TTI may be called a slot, a minislot, or the like instead of a subframe.

Here, a TTI refers to the minimum time unit of scheduling in radio communication, for example. For example, in the LTE system, the base station performs scheduling for allocating radio resources (frequency bandwidth, transmission power, and the like that can be used in each user terminal) to each user terminal in units of TTI. The definition of TTI is not limited to this.

A TTI may be a transmission time unit such as a channel-coded data packet (transport block), a code block, or a code word, or may be a processing unit such as scheduling or link adaptation. When a TTI is given, a time interval (for example, the number of symbols) in which a transport block, a code block, a code word, and the like are actually mapped may be shorter than TTI.

When one slot or one minislot is called a TTI, one or more TTIs (that is, one or more slots or one or more minislots) may be the minimum time unit of the scheduling. The number of slots (minislot number) constituting the minimum time unit of the scheduling may be controlled.

A TTI having a time length of 1 ms may be referred to as an ordinary TTI (TTI in LTE Rel. 8-12), a normal TTI, a long TTI, an ordinary subframe, a normal subframe, a long subframe, a slot, and the like. A TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, and the like) may be read as meaning a TTI having a time length exceeding 1 ms, and a short TTI (for example, shortened TTI) may be read as meaning a TTI having a TTI length of less than a TTI length of a long TTI and a TTI length of 1 ms or more.

A resource block (RB) is a resource allocation unit in the time domain and the frequency domain, and may include one or more consecutive subcarriers in the frequency domain.

The number of subcarriers included in the RB may be the same regardless of the numerology, and may be 12, for example. The number of subcarriers included in the RB may be determined based on the numerology.

Also, the time domain of an RB may include one or more symbols, and may have a length of 1 slot, 1 minislot, 1 subframe, or 1 TTI. 1 TTI, 1 subframe, and the like may be composed of one or more resource blocks.

Note that, one or more RBs may be called a physical resource block (PRB), a subcarrier group (SCG), a resource element group (REG), a PRB pair, a RB pair, and the like.

Also, a resource block may be configured by one or more resource elements (REs). For example, one RE may be a radio resource domain of one subcarrier and one symbol.

A bandwidth part (BWP) (which may be called a partial bandwidth or the like) may represent a subset of consecutive common resource blocks (common RBs) for a certain numerology in a certain carrier. Here, the common RB may be specified by an index of the RB based on the common reference point of the carrier. A PRB may be defined in a certain BWP and numbered within that BWP.

A BWP may include a BWP for UL (UL BWP) and a BWP for DL (DL BWP). One or more BWPs may be configured in one carrier for the UE.

At least one of the configured BWPs may be active, and the UE does not have to expect to transmit and receive predetermined signals/channels outside the active BWP. Note that "cell", "carrier", and the like in this disclosure may be read as meaning "BWP".

The above-described structures such as a radio frame, a subframe, a slot, a minislot, and a symbol are merely examples. For example, structures such as the number of subframes included in a radio frame, the number of slots per subframe or radio frame, the number of minislots included in a slot, the number of symbols and RBs included in a slot or minislot, the number of subcarriers included in RBs, and the number of symbols included in a TTI, a symbol length, the cyclic prefix (CP) length, and the like can be changed in various manner.

The terms "connected", "coupled", or any variations thereof mean any direct or indirect connection or coupling between two or more elements, and can include that one or more intermediate elements are present between two elements that are "connected" or "coupled" to each other. The coupling or connection between the elements may be physical, logical, or a combination thereof. For example, "connection" may be read as meaning "access". In the present disclosure, two elements can be "connected" or "coupled" to each other by using at least one of one or more wires, one or more cables, and one or more printed electrical connections, and as some non-limiting and non-exhaustive examples, by using electromagnetic energy having wavelengths in the radio frequency domain, a microwave region, and a light (both visible and invisible) region, and the like.

A reference signal may be abbreviated as RS and may be called a pilot according to applicable standards.

As used in the present disclosure, the phrase "based on" does not mean "based only on" unless explicitly stated otherwise. In other words, the phrase "based on" means both "based only on" and "based at least on".

"Means" in the configuration of each apparatus above may be replaced with "unit", "circuit", "device", and the like.

Any reference to elements using a designation such as "first", "second", or the like used in the present disclosure generally does not limit the amount or order of those elements. These designations can be used in the present disclosure as a convenient method to distinguish between two or more elements. Thus, the reference to the first and second elements does not imply that only two elements can be adopted, or that the first element has to precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive-OR.

In the present disclosure, for example, during translation, if articles such as a, an, and the in English are added, the present disclosure may include that a noun following these articles is plural.

As used in this disclosure, the term "determining" may encompass a wide variety of actions. "Determining" includes deeming that determining has been performed by, for example, judging, calculating, computing, processing, deriving, investigating, searching (looking up, search, inquiry) (for example, searching in a table, database, or another data structure), ascertaining, and the like. In addition, "determining" can include deeming that determining has been performed by receiving (for example, receiving information), transmitting (for example, transmitting information), inputting (input), outputting (output), accessing (for example, accessing data in a memory), and the like. In addition, "determining" can include deeming that determining has been performed by resolving, selecting, choosing, establishing, comparing, and the like. That is, "determining" may include deeming that "determining" regarding some action has been performed. Moreover, "determining" may be read as meaning "assuming", "expecting", "considering", and the like.

In the present disclosure, the wording "A and B are different" may mean "A and B are different from each other". It should be noted that the wording may mean "A and B are each different from C". Terms such as "separate", "couple", or the like may also be interpreted in the same manner as "different".

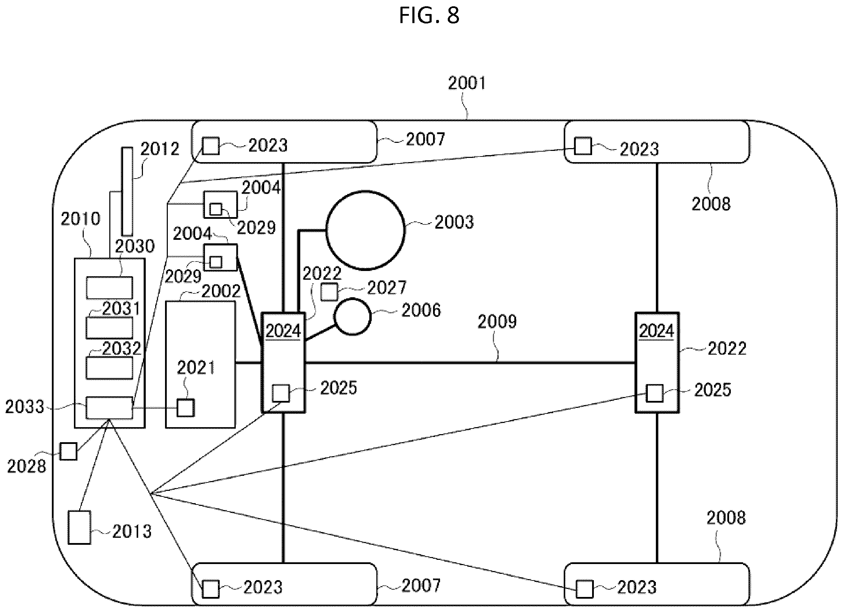

Fig. 8 is a diagram showing a configuration example of a vehicle 2001. As shown in Fig. 8, the vehicle 2001 includes a drive unit 2002, a steering unit 2003, an accelerator pedal 2004, a brake pedal 2005, a shift lever 2006, left and right front wheels 2007, left and right rear wheels 2008, an axle 2009, an electronic control unit 2010, various sensors 2021 to 2029, an information service unit 2012, and a communication module 2013.

The drive unit 2002 is composed of, for example, an engine, a motor, and an engine-motor hybrid. The steering unit 2003 includes at least a steering wheel and is configured to steer at least one of the front and rear wheels based on the operation of the steering wheel operated by the user. The electronic control unit 2010 consists of a microprocessor 2031, a memory (ROM, RAM) 2032, and communication ports (IO ports) 2033. The electronic control unit 2010 receives signals from various sensors 2021 to 2027 provided in the vehicle. The electronic control unit 2010 may be referred to as an ECU (Electronic Control Unit).

The signals from the various sensors 2021 to 2028 include a current signal from a current sensor 2021 for sensing the current of a motor, a speed signal of a front wheel and a rear wheel acquired by a rotation speed sensor 2022, a pressure signal of a front wheel and a rear wheel acquired by an air pressure sensor 2023, a speed signal of a vehicle acquired by a vehicle speed sensor 2024, an acceleration signal acquired by an acceleration sensor 2025, an accelerator pedal depressing amount signal acquired by an accelerator pedal sensor 2029, a brake pedal depressing amount signal acquired by a brake pedal sensor 2026, an operation signal of the shift lever acquired by a shift lever sensor 2027, and a detection signal acquired by an object detection sensor 2028 for detecting obstacles, vehicles, pedestrians, and the like.

The information service unit 2012 comprises various devices such as a car navigation system, an audio system, a speaker, a television, and a radio for providing various information such as driving information, traffic information, and entertainment information, and one or more ECUs for controlling these devices. The information service unit 2012 provides various multimedia information and multimedia services to the occupants of the vehicle 2001 by utilizing information acquired from an external device via the communication module 2013 or the like.

The information service unit 2012 may include an input device (e.g., keyboard, mouse, microphone, switch, button, sensor, touch screen, etc.) that accepts input from the outside or an output device (e.g., displays, speakers, LED lamps, touch screens, etc.) that performs output to the outside.

The driver assistance system unit 2030 consists of various devices, such as millimeter-wave radar, LiDAR (Light Detection and Ranging), camera, positioning locator (e.g., GNSS), map information (e.g., high-definition (HD) maps, self-driving car (AV) maps, etc.), gyro system (e.g., IMU (Inertial Measurement Unit), INS (Inertial Navigation System), etc.), AI (Artificial Intelligence) chip, AI processor, which are used to provide functions to prevent accidents or reduce the driver's driving load, and one or more ECUs that control these devices. The driver assistance system unit 2030 also transmits and receives various information via the communication module 2013 to realize a driver assistance function or an automatic driving function.

The communication module 2013 can communicate with the microprocessor 2031 and components of the vehicle 2001 via a communication port. For example, the communication module 2013 transmits and receives data via the communication port 2033 to and from the microprocessor 2031, the memory (ROM, RAM) 2032, and the sensors 2021 to 2028 in the drive unit 2002, the steering unit 2003, the accelerator pedal 2004, the brake pedal 2005, the shift lever 2006, the left and right front wheels 2007, the left and right rear wheels 2008, the axle 2009, and the electronic control unit 2010 in the vehicle 2001.

The communication module 2013 is a communication device that can be controlled by the microprocessor 2031 of the electronic control unit 2010 and can communicate with external devices. For example, it transmits and receives various information to and from external devices via radio communication. The communication module 2013 may be either inside or outside the electronic control unit 2010. The external device may be, for example, a base station, a mobile station, etc.

The communication module 2013 may transmit at least one of the signals from the various sensors 2021 to 2028 input to the electronic control unit 2010 described above, information obtained based on the signals, and information based on input from the outside (user) obtained via the information service unit 2012 to an external apparatus via radio communication. The electronic control unit 2010, the various sensors 2021 to 2028, the information service unit 2012, and the like may be called an input unit that accepts input. For example, the PUSCH transmitted by the communication module 2013 may include information based on the input.

The communication module 2013 receives various kinds of information (traffic information, signal information, inter-vehicular distance information, etc.) transmitted from an external device and displays them to the information service unit 2012 provided in the vehicle. The information service unit 2012 may be called an output unit that outputs information (e.g., outputs information to a device such as a display or a speaker based on a PDSCH (or data/information decoded from the PDSCH) received by the communication module 2013). Also, the communication module 2013 stores various information received from external devices in the memory 2032 available by the microprocessor 2031. Based on the information stored in the memory 2032, the microprocessor 2031 may control the drive unit 2002, the steering unit 2003, the accelerator pedal 2004, the brake pedal 2005, the shift lever 2006, the left and right front wheels 2007, the left and right rear wheels 2008, the axle 2009, the sensors 2021 to 2028, etc. provided in the vehicle 2001.

Although the present disclosure has been described in detail above, it is obvious to those skilled in the art that the present disclosure is not limited to the embodiments described in the present disclosure. The present disclosure can be implemented as modifications and variations without departing from the spirit and scope of the present disclosure as defined by the description of the scope of claims. Therefore, the description of the present disclosure is for the purpose of illustration and description, and does not have any restrictive meaning to the present disclosure.

### (Supplementary Note)

The above-described disclosure may be expressed as follows.

The first feature is a terminal comprising: a control unit that executes cell selection of a transition destination when mobility control by a lower layer fails; and a transmission unit that transmits a request for connection re-establishment when the selected cell is not a candidate cell according to the mobility control, wherein the control unit executes the cell selection based on a priority according to cell transition between communication devices constituting a radio base station or cell transition within the communication device.

The second feature is the terminal according to the first feature, wherein the control unit prioritizes the cell transition between the communication devices over the cell transition within the communication device.

The third feature is the terminal according to the first or second feature, wherein when the selected cell is the candidate cell according to the mobility control and the cell transition is the cell transition within the communication device, the transmission unit transmits the request for re-establishment without executing a recovery procedure according to the mobility control.

The fourth feature is the terminal according to any one of the first to third features, wherein when the selected cell is the candidate cell according to the mobility control and the cell transition is the cell transition between the communication devices, the control unit executes a recovery procedure according to the mobility control.

### DESCRIPTION OF REFERENCE NUMERALS

10 Radio communication system
20 NG-RAN
100 gNB
110 Radio communication unit
120 Handover processing unit
130 Measurement configuration unit
140 Control unit
200 UE
210 Radio communication unit
220 Measurement reporting unit
230 Handover execution unit
240 Control unit
1001 Processor
1002 Memory
1003 Storage
1004 Communication device
1005 Input device
1006 Output device
1007 Bus
2001 Vehicle
2002 Drive unit
2003 Steering unit
2004 Accelerator pedal
2005 Brake pedal
2006 Shift lever
2007 Left and right front wheels
2008 Left and right rear wheels
2009 Axle
2010 Electronic control unit
2012 Information service unit
2013 Communication module
2021 Current sensor
2022 Rotation speed sensor
2023 Air pressure sensor
2024 Vehicle speed sensor
2025 Acceleration sensor
2026 Brake pedal sensor
2027 Shift lever sensor
2028 Object detection sensor
2029 Accelerator pedal sensor
2030 Driver assistance system unit
2031 Microprocessor
2032 Memory (ROM, RAM)
2033 Communication port

## Claims

1. A terminal comprising:
a control unit that executes cell selection of a transition destination when mobility control by a lower layer fails; and
a transmission unit that transmits a request for connection re-establishment when the selected cell is not a candidate cell according to the mobility control, wherein
the control unit executes the cell selection based on a priority according to cell transition between communication devices constituting a radio base station or cell transition within the communication device.

2. The terminal according to claim 1, wherein the control unit prioritizes the cell transition between the communication devices over the cell transition within the communication device.

3. The terminal according to claim 1, wherein when the selected cell is the candidate cell according to the mobility control and the cell transition is the cell transition within the communication device, the transmission unit transmits the request for connection re-establishment without executing a recovery procedure according to the mobility control.

4. The terminal according to claim 1, wherein when the selected cell is the candidate cell according to the mobility control and the cell transition is the cell transition between the communication devices, the control unit executes a recovery procedure according to the mobility control.

5. A radio communication method in a terminal, the method comprising the steps of:
executing cell selection of a transition destination when mobility control by a lower layer fails; and
transmitting a request for connection re-establishment when the selected cell is not a candidate cell according to the mobility control, wherein
in the step of executing the cell selection, the cell selection is executed based on a priority according to cell transition between communication devices constituting a radio base station or cell transition within the communication device.
